# EUROPÄISCHE PATENTANMELDUNG

(11) **EP 1 293 732 A2**
(43) Veröffentlichungstag der Anmeldung: **19.03.2003**
(21) Anmeldenummer: 02019496.5
(22) Anmeldetag: 31.08.2002
(51) Int. Cl.: F24F 5/00, F25D 16/00

(54) **Anlage zur Kühlung eines Gebäudes**

(30) Priorität: 12.09.2001 DE 10144817
(71) Anmelder: HM Haustechnik Melsungen Service GmbH, 34212 Melsungen (DE)
(72) Erfinder: Dietl, Günther, 34134 Kassel (DE)
(74) Vertreter: WALTHER, WALTHER & HINZ Patentanwälte

(57) **Zusammenfassung**

Anlage zur Kühlung eines Gebäudes, umfassend eine Kälteanlage (4) sowie mindestens einen Wärmetauscher zur Flüssigkeitskühlung von Luft, die durch Rohrleitungen dem Gebäudeinneren zugeführt wird, wobei die Kälteanlage mit einem Pufferspeicher (1) in Verbindung steht, wobei der mindestens eine Wärmetauscher die Kühlflüssigkeit aus dem Pufferspeicher bezieht, wobei der Pufferspeicher (1) der Speicher einer Sprinkleranlage ist.

## Beschreibung

Die Erfindung betrifft eine Anlage zur Kühlung eines Gebäudes, umfassend eine Kälteanlage, sowie mindestens einen Wärmetauscher zur Flüssigkeitskühlung von Luft, die durch Rohrleitungen dem Gebäudeinneren zugeführt wird, wobei die Kälteanlage mit einem Pufferspeicher in Verbindung steht.

Anlagen zur Kühlung von Gebäuden sind hinreichend bekannt. Diese bestehen üblicherweise aus einer Kälteanlage, durch die mittelbar oder unmittelbar durch im Gebäude verlegte Rohrleitungen den einzelnen im Gebäude befindlichen Räumen gekühlte Luft zugeführt wird. Ebenfalls bekannt ist, die Kälteanlage mit einem sogenannten Pufferspeicher zu verbinden. Ein solcher Pufferspeicher bewirkt zum einen, dass die Anlage über einen längeren Zeitraum laufen kann, weil nämlich durch die Anlage zunächst der Speicher geladen wird, der schlussendlich dann in Verbindung mit einem entsprechenden Wärmetauscher für die gekühlte Luft sorgt. Das heißt, dass die Kälteanlage nicht ständig durch die Regelung an- und ausgeschaltet wird, wie dies der Fall wäre, wenn durch die Kälteanlage gekühlte Luft unmittelbar den Rohrleitungen zugeführt wird. Ein weiterer Vorteil eines Pufferspeichers besteht darin, dass durch diesen Pufferspeicher die Klimaanlage insgesamt in der Lage ist, auch Spitzenbelastungen abzudecken, ohne dass die Kälteanlage selbst auf eine derartige Spitzenbelastung ausgelegt sein müsste.

Nun ist ebenfalls bekannt, dass in großen Gebäuden, beispielsweise Bürogebäuden oder auch Bürohäusern, Sprinkleranlagen betrieben werden. Derartige Sprinkleranlagen besitzen üblicherweise einen Wasserspeicher von mehreren 100 m³ Inhalt. Durch die erfindungsgemäße Verwendung des Speichers der Sprinkleranlage als Pufferspeicher für die Klimaanlage bzw. die Kälteanlage wird nun erreicht, dass auf einen gesonderten Pufferspeicher für die Kälteanlage, wie er üblich ist, verzichtet werden kann. Hierdurch werden ganz erhebliche Kosten eingespart, wobei hinzukommt, dass aufgrund der Größe der Kapazität des Speichers der Sprinkleranlage die Kälteanlage der Klimaanlage in ihrer Leistung noch wesentlich geringer ausgelegt werden kann, als dies bei üblichen Klimaanlagen der Fall ist. Auch erhöht sich die Lebensdauer der Kälteanlage mit einem verhältnismäßig großen Pufferspeicher insbesondere dadurch, dass die Kälteanlage selbst weniger häufig gestartet werden muss. Eine geringere Anzahl an Verdichterstarts der Kälteanlage bedingt zwangsweise eine höhere Lebensdauer. Bedingt durch die geringere Anzahl von Verdichterstarts und insbesondere bedingt auch durch die geringe Leistung einer solchen Kälteanlage bei der Verwendung des Speichers der Sprinkleranlage als Pufferspeicher für die Kälteanlage, können Stromspitzen in ihrer Anzahl und Größe reduziert werden, wie sie auftreten, wenn der Verdichter der Kälteanlage startet.

Wie bereits ausgeführt hat der Pufferspeicher ein erhebliches Volumen und demzufolge auch eine entsprechende Speicherkapazität. Bei üblichen Klimaanlagen ist es nun so, dass das zur Kühlung dienende Wasser auf etwa 6° C herabgekühlt wird. In dem zu kühlenden Raum wird die kalte Luft durch im Bereich der Decke angeordnete Lüftungsschlitze eingelassen und die warme Luft dort auch wieder aufgenommen. Im Bereich der Luftaustrittsschlitze ist der Aufenthalt unter Umständen unangenehm, weil die kalte Luft eine Strömung erzeugt, die in der Aufenthaltszone als Zugerscheinung auftritt.

Nun gibt es die Möglichkeit der sogenannten Schwerkraftkühlung. Das heißt, die gekühlte Luft wird dem Raum im Bereich des Bodens zugeführt und drückt die warme Luft in im Deckenbereich angeordnete Aufnahmeschlitze. Die hierbei genutzte Luft hat eine Temperatur von ca. 17° C. Vorteilhaft bei der Schwerkraftkühlung ist, dass kaum oder nur in geringem Umfang Aggregate zum Luftaustausch in den Räumen erforderlich sind. Der Speicher bei der Erfindung kann Wasser mit durchschnittlich 16° C entsprechend der Größe des Speichers fast unbegrenzt zur Verfügung stellen. Hiermit kann die Luft auf ca. 17° C gekühlt werden. Es ist somit offensichtlich, dass insbesondere durch das Prinzip der Schwerkraftkühlung in Räumen die erfindungsgemäße Anlage sehr wirtschaftlich betrieben werden kann, insbesondere weil keine Lüftungsaggregate zum Austausch der Raumluft erforderlich sind.

Eine weitere Ersparnis bei dem Betrieb der erfindungsgemäßen Anlage ergibt sich dann, wenn der Speicher im Erdboden eingesetzt ist, das heißt, die Kühlwirkung des umgebenden Erdreichs für die Kühlung des Speichers mit benutzt wird.

Nach einem weiteren Merkmal der Erfindung ist vorgesehen, dass die Kälteanlage und der Pufferspeicher als Speicher der Sprinkleranlage durch einen zweiten Wärmetauscher miteinander in Verbindung stehen.

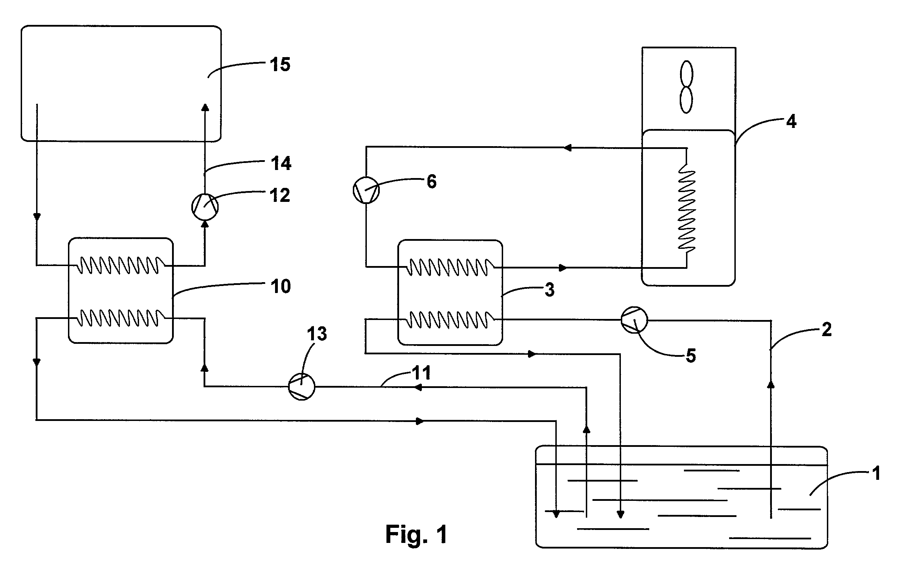

Anhand der Zeichnung wird die Erfindung nachstehend beispielhaft näher erläutert.

Der mit 1 bezeichnete als Flüssigkeitspeicher ausgebildete Pufferspeicher der Sprinkleranlage steht durch eine Leitung 2 mit einem Wärmetauscher 3 in Verbindung, wobei der Wärmetauscher 3 ebenfalls mit der mit 4 bezeichneten Kälteanlage der Klimaanlage verbunden ist. Entsprechende Pumpen 5 bzw. 6 sorgen für den Durchlauf zum einen des Wassers von dem Pufferspeicher der Sprinkleranlage 1 zum Wärmetauscher 2 bzw. des Kältemediums in der Kälteanlage 4. Ein weiterer Wärmetauscher 10 steht ebenfalls mit dem Speicher 1 durch die Leitung 11 in Verbindung, wobei darüber hinaus dieser Wärmetauscher 10 die Versorgung des Gebäudes 15 durch die Rohrleitungen 14 mit gekühltem Wasser für dezentrale Kühlung vornimmt. Zur Erhöhung der Strömungsgeschwindigkeit in der Rohrleitung 14 bzw. 11 ist eine Pumpe 12 bzw. 13 vorgesehen.

## Patentansprüche

1. Anlage zur Kühlung eines Gebäudes, umfassend eine Kälteanlage sowie mindestens einen Wärmetauscher zur Flüssigkeitskühlung von Luft, die durch Rohrleitungen dem Gebäudeinneren zugeführt wird, wobei die Kälteanlage mit einem Pufferspeicher in Verbindung steht, wobei der mindestens eine Wärmetauscher die Kühlflüssigkeit aus dem Pufferspeicher bezieht,
**dadurch gekennzeichnet,**
**dass** der Pufferspeicher (1) der Speicher einer Sprinkleranlage ist.

2. Anlage zur Kühlung eines Gebäudes nach Anspruch 1,
**dadurch gekennzeichnet,**
**dass** die Kälteanlage (4) und der Pufferspeicher (1) durch einen zweiten Wärmetauscher (3) miteinander in Verbindung stehen.

3. Anlage zur Kühlung eines Gebäudes nach Anspruch 1,
**dadurch gekennzeichnet,**
**dass** der Pufferspeicher (1) im Erdboden untergebracht ist.
